# EUROPEAN PATENT SPECIFICATION

(11) **EP 0 319 051 B1**
(45) Date of publication and mention of the grant of the patent: **21.04.1993**
(21) Application number: 88201300.6
(22) Date of filing: 22.06.1988
(51) Int. Cl.: B64C 25/00, F16F 7/12

(54) **Pivotally mounted high energy absorbing aircraft tail skid assembly having predetermined failure mode**
Hochenergieabsorbierender schwenkbarer Spornschuh mit vorbestimmter Art des Bruches
Patin de queue pivotant à haute dissipation d'énergie avec mode de rupture prédéterminé

(30) Priority: 04.12.1987 US 129021
(43) Date of publication of application: 07.06.1989
(73) Proprietor: THE BOEING COMPANY, Seattle, Washington 98124-2207 (US)
(72) Inventor: Gawne, Dennis M., Kirkland, WA 98033 (US)
(74) Representative: Hoijtink, Reinoud

(56) References cited:
- US-A- 3 252 548
- US-A- 3 493 082

## Description

The present invention relates to a high energy absorbing aircraft tail skid assembly having a predetermined failure mode. From US-A-3,493,082 an aircraft tail skid assembly is known comprising in combination: a crushable energy absorber; telescoping rods for mounting said crushable energy absorber, said telescoping rods having an upper end portion coupled to the aircraft fuselage; a skid shoe; a drag link coupled between the lower surface of said aircraft fuselage and said skid shoe; said drag link and said skid shoe also being coupled to the lower end of said telescoping rods.

Crushable energy absorbers are well documented in the prior art as shown for example in U.S. patent Nos. 3,130,819, 3,228,492, 3,252,548; 3,265,163; 3,295,798; 3,493,082; and 3,664,463. A crushable energy absorber has been shown in an airplane tail wheel as shown in U.S. Patent No. 3,130,819. U.S 3,252,548 describes a crushable shock absorbing aluminum cartridge for protecting the tail end of an aircraft from damage during landing or take off. The cartridge comprises a spirally wound open cell cilindrical structure formed from plane and corrugated sheets of aluminum. The shock absorber is mounted to the aircraft by a central mounting bolt.

The tail skid assembly of US-A-3.493.082 comprises an energy absorber unit mounted between a pivotable tail skid arm and the aircraft fuselarge. The energy absorber unit comprises a piston and cylinder arrangement in which a crushable flanged cylinder is arranged. A flanged cylinder comprises various compartments having different wall thicknesses.

The present invention seeks to provide an aircraft tail skid assembly as described above, having a predetermined failure mode, and including additional means for protecting the basic aircraft structure and the flight control system from being damaged. This is accomplished, according to the invention, in that the upper end portion of said telescoping rods is pivotally connected to a pivot link said pivot link being pivotably connected to a bulkhead support structure of the fuselage, and said pivot link further being connected by a fuse pin to a fuse link that is pivotably connected to said bulkhead support structure.

Further preferred embodiments of the invention from the subject matter of the dependent claims 2-4.

A tail strike of a magnitude less than the predetermined crush load of the crushable cartridge, has no effect on the tail skid assembly, except possibly a slight wear mark on the tail skid shoe.

In the advent of a tail strike of a magnitude in excess of the designed total capacity of the crushable cartridge the mounting linkage remains rigid, until the load on the fuse pin exceeds its predetermined shear load, at which time the fuse pin will shear thereby precluding damage to the basic aircraft structure.

Once the fuse pin has sheared, the pivot link is then free to rotate, which allows the drag link to rotate up until it bottoms out against the stop provided.

The pivot link is designed to rotate up and aft, which prevents damage to the flight control system in the advent of the telescoping rods and crushable cartridge failing to collapse.

A preferred embodiment of the present pivotally mounted high energy absorbing aircraft tail skid assembly is illustrated in the accompanying drawings wherein:
FIG. 1 is a side view of a preferred embodiment of the present pivotally mounted high energy absorbing tail skid assembly showing general location thereof;
FIG. 2 is a sectional side view taken through the present fuselage mounted tail skid assembly shown in FIG. 1;

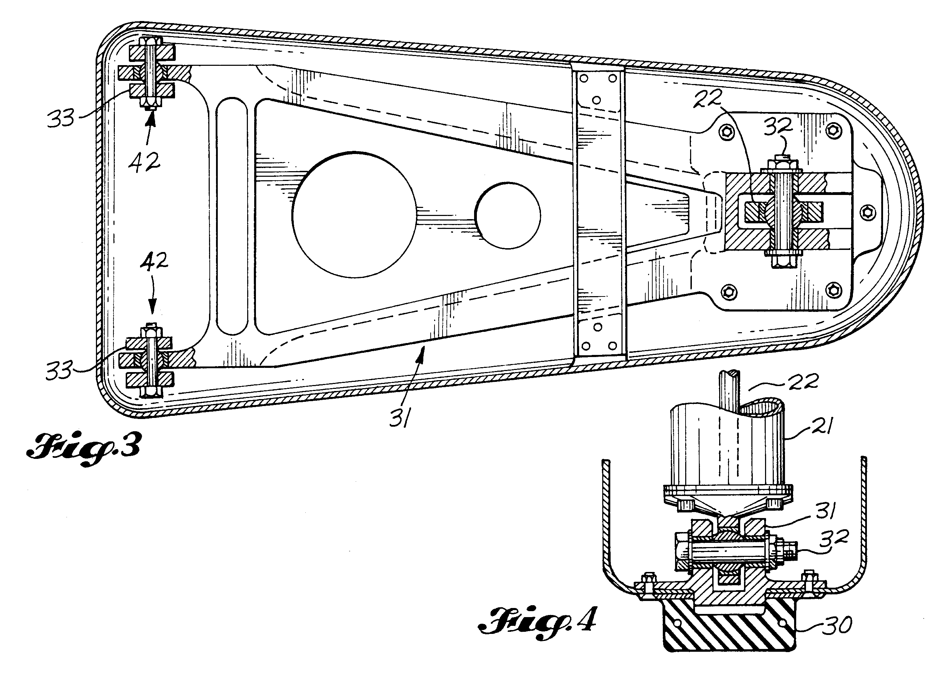

FIG. 3 is a sectional view taken along the lines 3-3 of FIG. 2 showing pivotal mounting hardware of the present tail skid assembly;

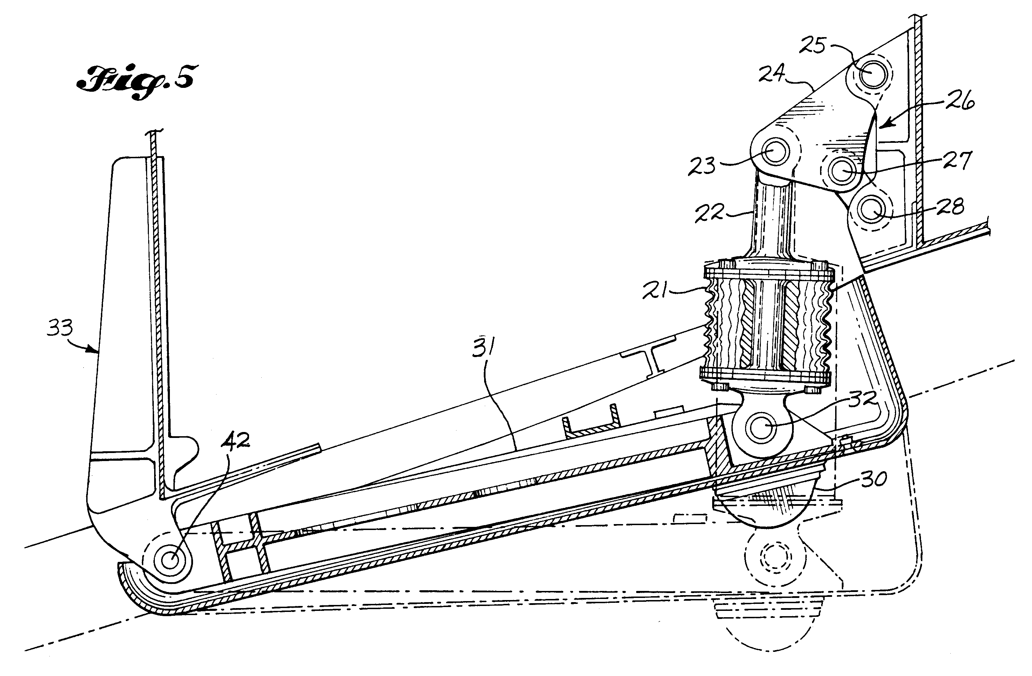

FIG. 4 is a sectional view taken along the lines 4-4 of FIG. 2 showing the mounting hardware between the telescoping rods and the drag link, and the drag link and the shoe;
FIG. 5 is a sectional view similar to FIG. 2, however showing the configuration when the aluminum cartridge is fully crushed from the initial position subsequent to impact of skid surface and ground; and,
FIG. 6 shows as in FIG. 5 the collapse of the crushable aluminum cartridge prior to linkage fuse pin break thereby providing a full deployment of the crushable aluminum cartridge in a predictable predetermined failure mode.

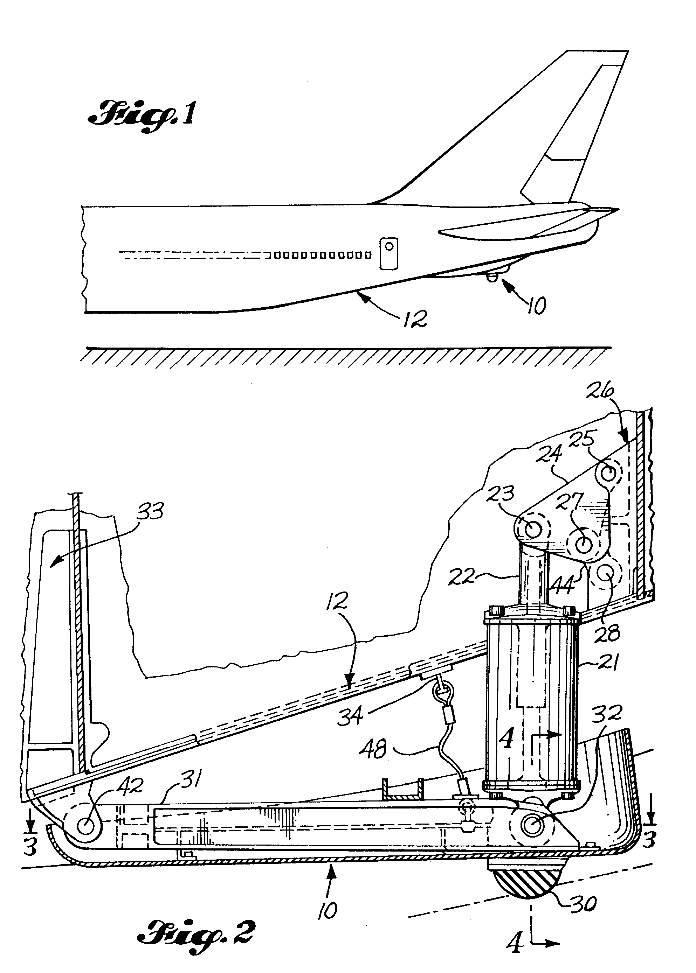

Turning now to FIG. 1 there is shown a pivotally mounted high energy absorbing aircraft tail skid assembly 10 in accordance with a preferred embodiment of the present invention which is mounted on the bulkhead at the rear of the fuselage of the aircraft 12. In FIG. 2 the present pivotally mounted high energy absorbing aircraft tail skid assembly 10, is seen to include a cylindrical aluminum crushable cartridge 21, mounted on telescoping rods 22. Telescoping rod 22 is pivotally connected at 23 to a pivot link 24.

Pivot link 24 is also connected by the fuse pin 27 to the fuse link 44, and by pin 25 to bulkhead support fitting 26.

Fuse link 44 is pivotally connected at 28 to the fixed bulkhead support fitting 26.

The crushable cartridge 21 is mounted in the telescoping rods 22, and the lower end is pivotally connected at 32 to the drag link 31.

The drag link 31 is pivotally connected at 42 to the drag link support fittings 33, which are permanently mounted to aircraft fuselage 12. The tail skid shoe 30 is bolted to the lower aft surface of the drag link 31.

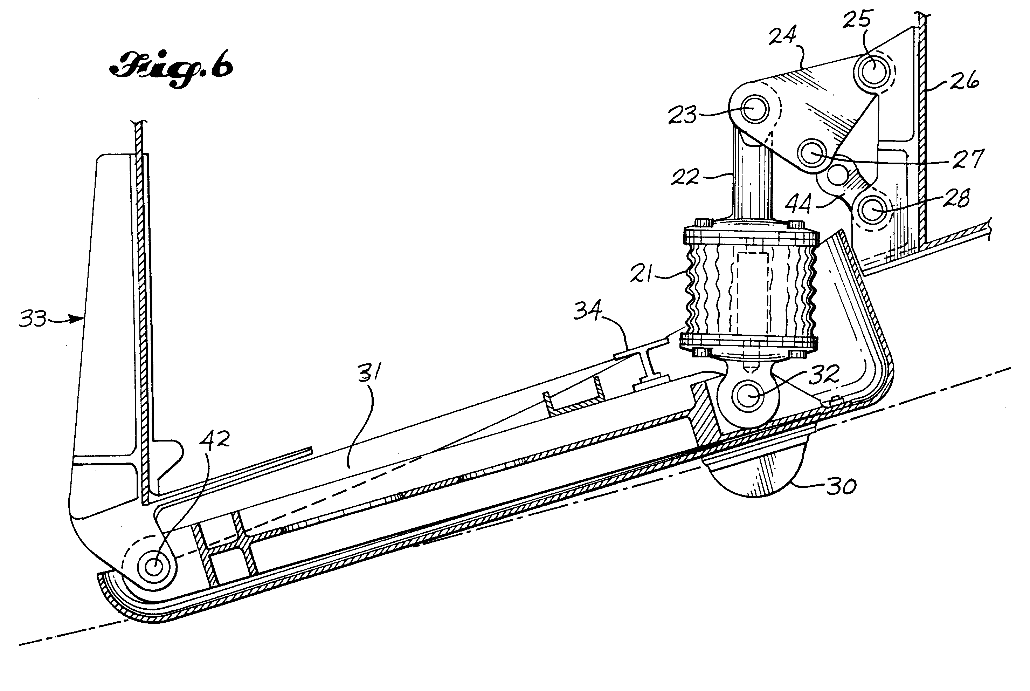

FIG. 5 shows the result of a tail strike of a magnitude equal to but less than the ultimate shear value of the shear pin 27.

FIG. 6 shows the result of a tail strike of a magnitude greater than the shear value of the shear pin 27.

A restraining lanyard 48 (shown on FIG. 2) is secured to the aircraft fuselage 12 and to the drag link 31. This serves several purposes - (it supports the drag link during cartridge replacement) - mainly it is a human safety factor during maintenance if either bolts 23 or 32 are removed - or damage to aircraft structure, also allows the system to be serviced by a single person.

## Claims

1. An aircraft tail skid assembly (10) comprising in combination:
a crushable energy absorber (21);
telescoping rods (22) for mounting said crushable energy absorber (21), said telescoping rods (22) having an upper end portion coupled to the aircraft fuselage (12);
a skid shoe (30);
a drag link (31) coupled between the lower surface of said aircraft fuselage (12) and said skid shoe (30);
said drag link (31) and said skid shoe (30) also being coupled to the lower end of said telescoping rods (22),
**characterized in that** the upper end portion of said telescoping rods (22) is pivotally connected to a pivot link (24), said pivot link (24) being pivotably connected to a bulkhead support structure (26) of the fuselage (12), and said pivot link (24) further being connected by a fuse pin (27) to a fuse link (44) that is pivotably connected to said bulkhead support structure (26).

2. The aircraft tail skid assembly (10) of claim 1, **characterized in that** the crushable energy absorber (21) is an aluminum cartridge arranged around said telescoping rods (22).

3. The aircraft tail skid assembly (10) of claims 1 or 2, **characterized by** flexible restraining means (48) secured between the aircraft fusela ge (12) and the drag link (31).

4. The aircraft tail skid assembly according to any one of the preceding claims, **characterized by** a metered decal for providing a visual inspection of the assembly (10) by observation from the ground.

## Patentansprüche

1. Flugzeug-Schwanzspornanordnung (10) mit der Kombination folgender Merkmale:
ein zusammenquetschbarer Energieabsorber (21);
teleskopartig ineinanderschiebbare Stangen (22) zur Anbringung des genannten zusammenquetschbaren Energieabsorbers (21), wobei die genannten teleskopartig ineinanderschiebbaren Stangen (22) einen oberen Endabschnitt aufweisen, der an den Flugzeugrumpf (12) angekoppelt ist;
ein Gleitschuh (30);
eine Zugschwinge (31), die zwischen der unteren Oberfläche des genannten Flugzeugrumpfes (12) und dem genannten Gleitschuh (30) angekoppelt ist;
die genannte Zugschwinge (31) und der genannte Gleitschun (30) sind auch an das untere Ende der genannten, teleskopartig ineinanderschiebbaren Stangen (22) angekoppelt,
dadurch **gekennzeichnet,** daß der obere Endabschnitt der genannten teleskopartig ineinanderschiebbaren Stangen (22) schwenkbar mit einem Schwenkhebel (24) verbunden ist, daß der genannte Schwenkhebel (24) schwenkbar mit einer Schott-Tragestruktur (26) des Rumpfes (12) verbunden ist, und daß der genannte Schwenknebel (24) ferner durch einen Sicherungsstift (27) mit einem Sicherungslenker (44) verbunden ist, der schwenkbar mit der genannten Schott-Tragestruktur (26) verbunden ist.

2. Flugzeug-Schwanzspornanordnung (10) nach Anspruch 1, dadurch **gekennzeichnet,** daß der zusammenquetschbare Energieabsorber (21) eine Aluminiumpatrone ist, die rund um die genannten teleskopartig ineinanderschiebbaren Stangen (22) angeordnet ist.

3. Flugzeug-Schwanzspornanordnung (10) nach Anspruch 1 oder 2, **gekennzeichnet** durch eine flexible Halteeinrichtung (48), die zwischen dem Flugzeugrumpf (12) und der Zugschwinge (31) befestigt ist.

4. Flugzeug-Schwanzspornanordnung nach irgendeinem der vorangehenden Ansprüche, **gekennzeichnet** durch ein mit einer Meßeinteilung versehenes Abzieh- bzw. Schiebebild, um eine optische Inspektion der Anordnung (10) durch Beobachtung vom Boden her zu ermöglichen.

## Revendications

1. Patin de queue d'avion (10) comportant en combinaison :
un élément d'absorption d'énergie pouvant être écrasé (21);
des tiges télescopiques (22) destinées à supporter ledit élément d'absorption d'énergie pouvant être écrasé (21), lesdites tiges télescopiques (22) ayant une partie d'extrémité supérieure reliée au fuselage de l'avion (12);
un patin (30);
un bras (31) relié entre la surface inférieure dudit fuselage d'avion (12) et ledit patin à queue (30);
ledit bras (31) et ledit patin (30) étant également reliés à l'extrémité inférieure desdites tiges télescopiques (22);
caractérisé en ce que la partie d'extrémité supérieure desdites tiges télescopiques (22) est reliée de façon pivotante à un basculeur (24), ledit basculeur (24) étant relié de façon pivotante à une structure de support de cloison (26) du fuselage (12), et ledit basculeur (24) étant en outre relié par un boulon de sécurité (27) à une biellette de sécurité (44) qui est reliée de façon pivotante à ladite structure de support de cloison (26).

2. Patin de queue d'avion (10) selon la revendication 1, caractérisé en ce que l'élément d'absorption d'énergie pouvant être écrasé (21) est une cartouche en aluminium disposée autour des tiges télescopiques (22).

3. Patin de queue d'avion (10) selon la revendication 1 ou 2, caractérisé par des moyens de retenue flexibles (48) fixés entre le fuselage d'avion (12) et le bras (31).

4. Patin de queue d'avion (10) selon l'une quelconque des revendications précédentes, caractérisé par une décalcomanie graduée destinée à permettre une inspection visuelle du patin (10) par observation depuis le sol.
